# EUROPEAN PATENT APPLICATION

(11) **EP 4 752 909 A1**
(43) Date of publication of application: **03.06.2026**
(21) Application number: 24851167.7
(22) Date of filing: 18.10.2024
(51) Int. Cl.: G21D 3/08, G21F 9/00, G21C 17/022

(54) **ZINC INJECTION CONTROL METHOD AND APPARATUS, ZINC INJECTION SYSTEM, AND COMPUTER DEVICE**

(30) Priority: 25.01.2024 CN 202410104537
(71) Applicant: China Nuclear Power Engineering Co., Ltd., Shenzhen, Guangdong 518124 (CN); China Nuclear Power Design Company Ltd. (Shenzhen), Shenzhen, Guangdong 518172 (CN)
(72) Inventor: ZHANG, Chao, Shenzhen, Guangdong 518124 (CN); LI, Gongjie, Shenzhen, Guangdong 518124 (CN); DENG, Tian, Shenzhen, Guangdong 518124 (CN); XUE, Cong, Shenzhen, Guangdong 518124 (CN); REN, Liyong, Shenzhen, Guangdong 518124 (CN); JIANG, Hui, Shenzhen, Guangdong 518124 (CN); LIN, Feng, Shenzhen, Guangdong 518124 (CN); CHENG, Chao, Shenzhen, Guangdong 518124 (CN)
(74) Representative: Greaves Brewster LLP
(86) International application number: PCT/CN2024/125827
(87) International publication number: WO 2025/031523

(57) **Abstract**

A zinc injection control method and apparatus, a zinc injection system, a computer device, a computer-readable storage medium, and a computer program product. The method comprises: controlling a zinc injection apparatus to perform zinc injection on a loop of a nuclear power plant at a preset zinc injection flow rate, acquiring a real-time zinc concentration and real-time parameters of a unit of the loop; and on the basis of the real-time zinc concentration, the real-time parameters of the unit of the loop and a standard concentration range, performing control on the zinc injection.

## Description

### RELATED APPLICATIONS

The application claims priority to Chinese patent application No. 2024101045376, filed on January 25, 2024, and entitled "ZINC INJECTION CONTROL METHOD AND APPARATUS, ZINC INJECTION SYSTEM, AND COMPUTER DEVICE", the entire contents of which are incorporated herein by reference.

### TECHNICAL FIELD

The application relates to the field of nuclear power plant technology, specifically to a zinc injection control method, a zinc injection control apparatus, a zinc injection system, a computer device, a computer-readable storage medium, and a computer program product.

### BACKGROUND

The primary circuit zinc injection technology in nuclear power plants is a water chemistry control technology. The technology includes continuously injecting a zinc acetate solution into the primary circuit of the nuclear power plant, which alters the morphology of the metal oxide layer in the circuit, reduces corrosion of the primary circuit equipment materials, and decreases the deposition of activated corrosion products from the coolant into the primary circuit materials, thereby reducing the deposition of radioactive cobalt in the primary circuit materials and lowering the radiation field in the primary circuit. The existing zinc injection water chemistry technology used in the primary circuit of pressurized water reactor (PWR) units originates from boiling water reactor (BWR) units, and it is used to mitigate stress corrosion cracking and address issues such as intergranular corrosion and excessively high radiation dose rates.

However, the current method of manually regulating zinc injection or calculating the injection dosage using tools such as metering pumps tends to result in insufficiently timely zinc injection into the primary circuit and imprecise control over the amount of zinc injected.

### SUMMARY

According to various embodiments disclosed in the application, a zinc injection control method, a zinc injection control apparatus, a zinc injection system, a computer device, a computer-readable storage medium, and a computer program product are provided.

In a first aspect, the application provides a zinc injection control method, and the method includes: controlling a zinc injection device to inject zinc into a primary circuit of a nuclear power plant at a preset zinc injection flow rate; acquiring a real-time zinc concentration and real-time parameters of a primary circuit unit; and controlling the zinc injection based on the real-time zinc concentration, the real-time parameters of the primary circuit unit, and a standard concentration range.

In an embodiment, controlling the zinc injection based on the real-time zinc concentration, the real-time parameters of the primary circuit unit, and the standard concentration range includes: obtaining a change state of the primary circuit based on the real-time parameters and historical parameters of the primary circuit unit; and controlling the zinc injection based on the real-time zinc concentration, the change state of the primary circuit, and the standard concentration range.

In an embodiment, controlling the zinc injection based on the real-time zinc concentration, the change state of the primary circuit, and the standard concentration range includes: analyzing the real-time zinc concentration and the standard concentration range to obtain a concentration analysis result; and controlling the zinc injection based on the concentration analysis result and the change state of the primary circuit.

In an embodiment, after analyzing the real-time zinc concentration and the standard concentration range to obtain the concentration analysis result, the method further includes increasing a frequency of acquiring the real-time zinc concentration when the concentration analysis result is outside the standard concentration range.

In an embodiment, the change state of the primary circuit includes a long-term change, and the concentration analysis result includes the concentration being excessively low; and controlling the zinc injection based on the concentration analysis result and the change state of the primary circuit includes: controlling a zinc injection flow rate of the zinc injection device to increase when the change state of the primary circuit is the long-term change and the concentration analysis result is that the concentration is excessively low.

In an embodiment, the change state of the primary circuit comprises a long-term change, and the concentration analysis result comprises the concentration being excessively high; and controlling the zinc injection based on the concentration analysis result and the change state of the primary circuit includes: controlling a zinc injection flow rate of the zinc injection device to decrease, when the change state of the primary circuit is the long-term change and a concentration analysis result is that concentration is excessively high.

In an embodiment, after controlling the zinc injection flow rate of the zinc injection device to decrease, the method further includes controlling a purification unit to increase a purification flow rate.

In an embodiment, after controlling a purification unit to increase the purification flow rate, the method further includes acquiring a purified zinc concentration at least twice; and controlling the zinc injection device to stop working when it is determined that the zinc concentration is in an upward trend based on purified zinc concentrations.

In an embodiment, the change state of the primary circuit includes a short-term change, and before controlling the zinc injection based on the concentration analysis result and the change state of the primary circuit, the method includes increasing a frequency of acquiring the real-time zinc concentration when the change state of the primary circuit is the short-term change.

In an embodiment, before controlling the zinc injection device to inject zinc into the primary circuit at the preset zinc injection flow rate, the method further includes: obtaining an operating state of the primary circuit unit; determining whether the zinc injection device is allowed to operate based on the operating state of the primary circuit unit; and controlling the zinc injection device to inject zinc into the primary circuit at the preset zinc injection flow rate, when it is determined that the zinc injection device is allowed to operate.

A zinc injection control apparatus includes: a zinc injection operation module configured to control a zinc injection device to inject zinc into a primary circuit at a preset zinc injection flow rate; a parameter acquisition module configured to acquire a real-time zinc concentration and real-time parameters of a primary circuit unit; and a zinc injection adjustment module configured to control the zinc injection based on the real-time zinc concentration, the real-time parameters of the primary circuit unit, and a standard concentration range.

In an embodiment, the zinc injection adjustment module is further configured to: obtain a change state of the primary circuit based on the real-time parameters and historical parameters of the primary circuit unit; and control the zinc injection based on the real-time zinc concentration, the change state of the primary circuit, and the standard concentration range.

In an embodiment, the zinc injection adjustment module is further configured to: analyze the real-time zinc concentration and the standard concentration range to obtain a concentration analysis result; and control the zinc injection based on the concentration analysis result and the change state of the primary circuit.

In an embodiment, the zinc injection adjustment module is further configured to increase a frequency of acquiring the real-time zinc concentration when the concentration analysis result is outside the standard concentration range.

In an embodiment, the change state of the primary circuit includes a long-term change, and the concentration analysis result includes the concentration being excessively low, and the zinc injection adjustment module is further configured to: control a zinc injection flow rate of the zinc injection device to increase when the change state of the primary circuit is the long-term change and the concentration analysis result is that the concentration is excessively low.

In an embodiment, the change state of the primary circuit includes a long-term change, and the concentration analysis result including the concentration being excessively high; and the zinc injection adjustment module is further configured to: control a zinc injection flow rate of the zinc injection device to decrease, when the change state of the primary circuit is the long-term change and the concentration analysis result is that the concentration is excessively high.

In an embodiment, after controlling the zinc injection flow rate of the zinc injection device to decrease, the zinc injection adjustment module is further configured to control a purification unit to increase a purification flow rate.

In an embodiment, after controlling a purification unit to increase the purification flow rate, the zinc injection adjustment module is further configured to: acquire a purified zinc concentration at least twice; and control the zinc injection device to stop working when it is determined that the zinc concentration is in an upward trend based on purified zinc concentrations.

In an embodiment, the change state of the primary circuit includes a short-term change, and the zinc injection adjustment module is further configured to increase a frequency of acquiring the real-time zinc concentration when the change state of the primary circuit is the short-term change.

In an embodiment, the apparatus further includes a zinc injection start module, and the zinc injection start module is configured to: obtain an operating state of the primary circuit unit; determine whether the zinc injection device is allowed to operate based on the operating state of the primary circuit unit; and control the zinc injection device to inject zinc into the primary circuit at the preset zinc injection flow rate, when it is determined that the zinc injection device is allowed to operate.

A zinc injection system, including a zinc injection device, a controller, and a concentration detection device. The controller is connected to the zinc injection device and the concentration detection device. The concentration detection device is configured to acquire the real-time zinc concentration and send the real-time zinc concentration to the controller. The controller is configured to perform the zinc injection control method of each embodiment.

A computer device includes a memory and one or more processors. The memory has computer-readable instructions stored thereon, and the computer-readable instructions, when executed by the one or more processors, cause the one or more processors to perform steps of: controlling a zinc injection device to inject zinc into a primary circuit of a nuclear power plant at a preset zinc injection flow rate; acquiring a real-time zinc concentration and real-time parameters of a primary circuit unit; and controlling the zinc injection based on the real-time zinc concentration, the real-time parameters of the primary circuit unit, and a standard concentration range.

A computer-readable storage medium has a computer program stored thereon. The computer program, when executed by a processor, performs steps of: controlling a zinc injection device to inject zinc into a primary circuit of a nuclear power plant at a preset zinc injection flow rate; acquiring a real-time zinc concentration and real-time parameters of a primary circuit unit; and controlling the zinc injection based on the real-time zinc concentration, the real-time parameters of the primary circuit unit, and a standard concentration range.

A computer program product includes a computer program. The computer program, when executed by a processor, performs steps of: controlling a zinc injection device to inject zinc into a primary circuit of a nuclear power plant at a preset zinc injection flow rate; acquiring a real-time zinc concentration and real-time parameters of a primary circuit unit; and controlling the zinc injection based on the real-time zinc concentration, the real-time parameters of the primary circuit unit, and a standard concentration range.

Details of one or more embodiments of the application are set forth in the following drawings and description. Other features and advantages of the application will become apparent from the specification, drawings, and claims.

### BRIEF DESCRIPTION OF THE DRAWINGS

In order to more clearly illustrate the technical solutions in the embodiments of the present application, a brief description is provided below for the drawings used in the description of the embodiments. Obviously, the drawings in the following description are merely some embodiments of the application. For those of ordinary skill in the art, other drawings can also be obtained based on these drawings without involving any inventive effort.
FIG. 1 is a view illustrating an application environment of a zinc injection control method according to one or more embodiments;
FIG. 2 is a schematic flow chart of a zinc injection control method according to one or more embodiments;
FIG. 3 is a flow chart illustrating steps of controlling a zinc injection based on a real-time zinc concentration, real-time parameters of a primary circuit unit, and a standard concentration range according to one or more embodiments.
FIG. 4 is a flow chart illustrating steps of controlling a zinc injection based on a real-time zinc concentration, a change state of a primary circuit, and the standard concentration range according to one or more embodiments;
FIG. 5 is a flow chart illustrating steps of controlling a zinc injection based on the real-time zinc concentration, the change state of the primary circuit, and the standard concentration range according to one or more embodiments;
FIG. 6 is a flow chart illustrating steps of controlling a zinc injection based on the real-time zinc concentration, the change state of the primary circuit, and the standard concentration range according to one or more embodiments;
FIG. 7 is a flow chart illustrating steps of controlling a zinc injection based on the real-time zinc concentration, the change state of the primary circuit, and the standard concentration range according to one or more embodiments;
FIG. 8 is a flow chart illustrating steps of controlling a zinc injection based on the real-time zinc concentration, the change state of the primary circuit, and the standard concentration range according to one or more embodiments;
FIG. 9 is a flow chart illustrating steps of controlling a zinc injection based on a concentration analysis result and a change state of the primary circuit according to one or more embodiments;
FIG. 10 is a flow chart illustrating steps of controlling a zinc injection based on the real-time zinc concentration, the change state of the primary circuit, and the standard concentration range according to one or more embodiments;
FIG. 11 is a schematic flow chart of a zinc injection control method according to one or more embodiments;
FIG. 12 is a view illustrating a structure of a zinc injection system according to one or more embodiments;
FIG. 13 is a block diagram illustrating a structure of a zinc injection control apparatus according to one or more embodiments; and
FIG. 14 is a view illustrating an internal structure of a computer device according to one or more embodiments.

### DETAILED DESCRIPTION OF THE EMBODIMENTS

The technical solutions in the embodiments of the present application will be clearly and completely described with reference to the drawings of the embodiments of the present application. Obviously, the embodiments described are only some, but not all of the embodiments of the present application. Based on the embodiments of the present application, all other embodiments obtained by a person of ordinary skill in the art without involving creative efforts shall fall within the protection scope of the present application.

It may be understood that the terms "first", "second", etc., as used in the application may be used to describe various elements, but these elements are not limited by these terms. These terms are only used to distinguish one element from another. For example, without departing from the scope of the application, a first resistor may be referred to as a second resistor, and similarly, a second resistor may be referred to as a first resistor. Both the first resistor and the second resistor are resistors, but they are not the same resistor.

It may be understood that the term "connected" in the following embodiments, if used to describe circuits, modules, units, etc., that involve the transmission of electrical signals or data therebetween, should be interpreted as "electrically connected", "communicatively connected", or similar.

As used herein, the singular forms of "a", "an" and "the/said" are intended to include the plural forms as well, unless the context clearly indicates otherwise. It should also be understood that the terms, such as "comprise/contain" or "have" specify the presence of stated features, wholes, steps, operations, components, parts, or combinations thereof, but do not preclude the presence or addition of one or more other features, wholes, steps, operations, components, parts, or combinations thereof. Additionally, the term "and/or" as used in this specification includes any and all combinations of the related listed items.

Unless otherwise defined, all technical and scientific terms used herein have the same meaning as commonly understood by those ordinary skilled in the art to which the application belongs. The terminology used in the description of the embodiments herein is for the purpose of describing particular embodiments only and is not intended to limit the application.

A pressurized water reactor (PWR) nuclear power plant typically includes a primary circuit, a secondary circuit, and a tertiary circuit. The primary circuit, the secondary circuit, and the tertiary circuit of the PWR nuclear power plant are isolated from each other and transfer heat only.

For example, the primary circuit of the PWR is a reactor coolant system, which includes components such as a reactor pressure vessel, a main pump, a pressurizer, and a steam generator, and is disposed inside a containment. The secondary circuit includes components such as a steam generator, a condensate pump, a steam-water separator, a steam turbine, and a steam condenser (or a condenser). The tertiary circuit includes Balance of Plant (BOP) equipment which consists of a generator, a water pump, an external evaporator, and other auxiliary equipment.

The primary circuit and the secondary circuit exchange heat via steam generators, sequentially transferring the heat generated by nuclear fission to cool the structures in the nuclear power plant. However, over years of operation, the PWR nuclear power plant inevitably experiences corrosion of the materials of the circuits especially the primary circuit. Based on experience from nuclear power plant operation and maintenance, it is known that the primary circuit unit in the PWR is more frequently troubled by leaks and ruptures in the heat transfer tube of the steam generator. The thickness of the heat transfer tube is thinner than those of other components in the primary circuit unit, and radioactive water of the primary circuit flows through the heat transfer tube. When the heat transfer tube ruptures, it not only results in a reactor loss-of-coolant shutdown but also leads to the leakage of radioactive water into the secondary circuit, resulting in nuclear contamination.

Therefore, following the example of the zinc injection technology used in a boiling water reactor unit, the zinc injection water chemistry technology is also used to protect the materials of the primary circuit, thereby mitigating intergranular corrosion and stress corrosion cracking of the component materials. The application provides a zinc injection control method for controlling zinc injection in a primary circuit of a nuclear power plant. The protection effectiveness for a primary circuit unit is enhanced through a precise zinc injection, thereby extending the service life of the unit, and increasing the safety of the nuclear power plant.

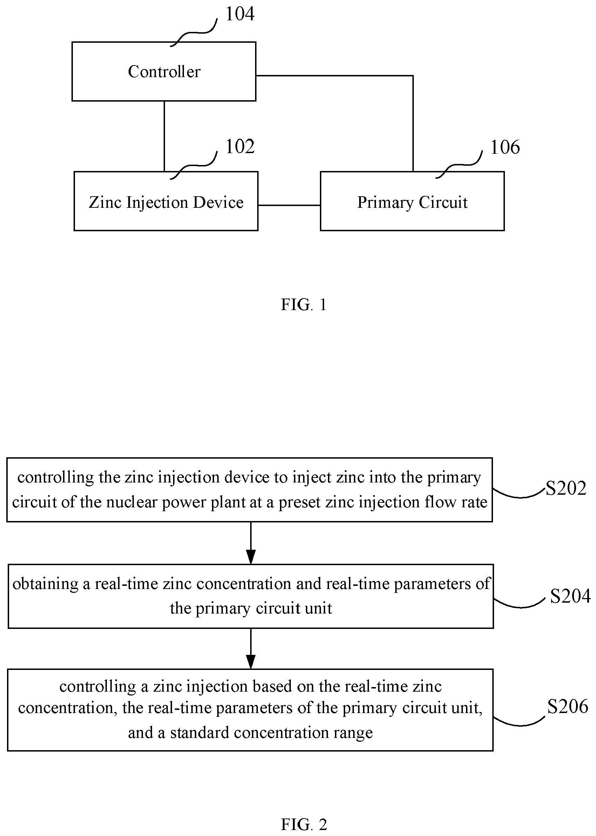

The zinc injection control method provided in the application embodiment can be applied to an application environment shown in FIG. 1. A controller 104 is connected to a zinc injection device 102 and a primary circuit 106. The zinc injection device 102 is connected to the primary circuit 106. The controller 104 controls the zinc injection device 102 to inject zinc into the primary circuit 1016, and controls the zinc injection process according to the zinc injection control method described in the following embodiments. The controller 104 can be, but is not limited to, any personal computer, laptop, smartphone, tablet computer, or the like.

In an exemplary embodiment, as shown in FIG. 2, a zinc injection control method is provided. Taking the method applied to the controller 104 in FIG. 1 as an example, the method includes the following steps 202 to 206.

At step 202, control the zinc injection device to inject zinc into the primary circuit of the nuclear power plant at a preset zinc injection flow rate.

The zinc injection device is an output device that injects zinc into the primary circuit of the nuclear power plant and is configured to deliver a prepared zinc-containing solution to the primary circuit of the nuclear power plant. By supplementing zinc, the radiation field is reduced, thereby forming a more corrosion-resistant film to protect the primary circuit of the nuclear power plant.

Specifically, the controller can control the zinc injection device to inject zinc into the primary circuit of the nuclear power plant. To ensure that the injected zinc-containing solution generates an adequate corrosion film to protect the primary circuit of the nuclear power plant, the controller stores the preset zinc injection flow rate. This preset zinc injection flow rate is manually set and can be freely adjusted by operating personnel based on factors such as a service duration or a corrosion degree of the primary circuit of the nuclear power plant. When the zinc injection device is initially started and begins the zinc injection, the controller controls the zinc injection device to inject zinc into the primary circuit of the nuclear power plant at the preset zinc injection flow rate.

Optionally, the zinc injection device may include a zinc injection tank and a zinc injection pump. The zinc injection tank is configured to store a zinc-containing solution, such as a zinc acetate solution. The zinc injection pump is configured to pump the zinc-containing solution into the primary circuit of the nuclear power plant. Optionally, the numbers of zinc injection devices and zinc injection pumps are not limited, and a plurality of zinc injection devices and a plurality of zinc injection pumps can be provided for redundancy to ensure the reliability of the zinc injection process.

At step 204, acquire a real-time zinc concentration and real-time parameters of a primary circuit unit.

The primary circuit unit of the nuclear power plant is configured to perform a power generation function of the nuclear power plant, and includes important components such as the reactor. The controller is connected to the primary circuit unit to obtain the real-time parameters of the primary circuit unit. The controller can also obtain the real-time zinc concentration, which is the real-time zinc concentration within the primary circuit. This real-time zinc concentration can be obtained directly by the controller or through a concentration detection device.

At step 206, control a zinc injection based on the real-time zinc concentration, the real-time parameters of the primary circuit unit, and a standard concentration range.

Specifically, the controller stores the standard concentration range, and the standard concentration range is configured to be compared with the real-time zinc concentration. Based on a comparison result between the real-time zinc concentration and the standard concentration range, and the real-time parameters of the primary circuit unit, the controller analyzes whether a current zinc concentration of the primary circuit unit is normal, and controls the zinc injection accordingly based on the analysis result, thus adjusting the zinc injection process to ensure the zinc concentration in the primary circuit to meet the requirements, that is, to be within the standard concentration range.

For example, the standard concentration range includes an upper threshold and a lower threshold. When the real-time zinc concentration is greater than the upper threshold or less than the lower threshold, the real-time zinc concentration is outside the standard concentration range. When the real-time zinc concentration is less than or equal to the upper threshold and greater than or equal to the lower threshold, the real-time zinc concentration is within the standard concentration range.

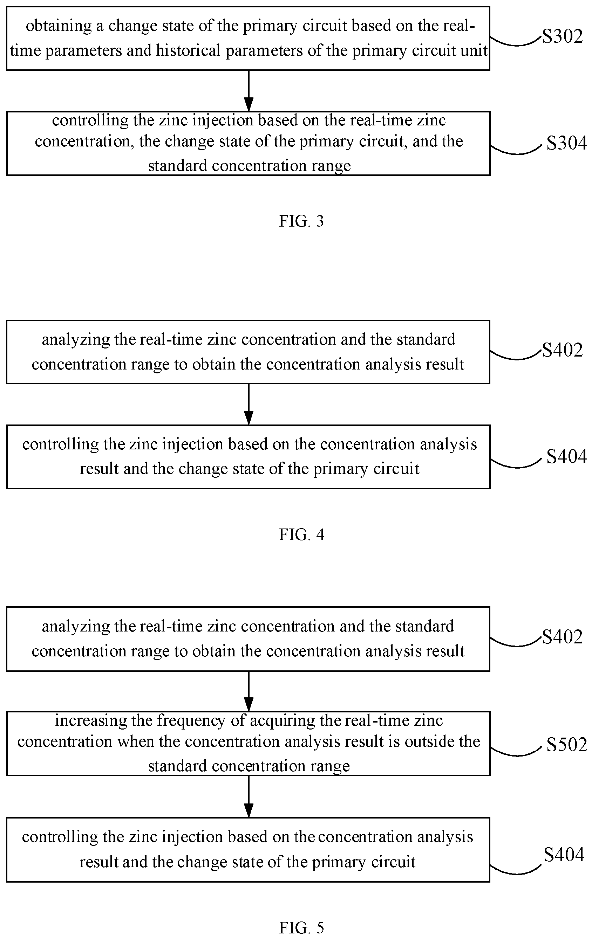

In an embodiment, as shown in FIG. 3, step 206 includes steps 302 to 304.

At step 302, obtain a change state of the primary circuit based on the real-time parameters and historical parameters of the primary circuit unit.

The historical parameters are the parameters of the primary circuit unit at specific historical time points. Different components of the primary circuit unit have different historical parameters. These historical parameters can be parameters of the primary circuit unit recorded at different operating time points during the current operation, or can be obtained by integrating and analyzing historical parameters of a plurality of other units, which have the same model and operating conditions as the primary circuit unit, during a plurality of operations.

Specifically, the historical parameters of the primary circuit unit are stored in the controller. Th controller analyzes the acquired real-time parameters of the primary circuit unit against the historical parameters to determine the change state of the primary circuit. This analysis can be performed by comparing the real-time parameters of the current operation with the historical parameters of the same time period in previous operations, or by comparing the real-time parameters of the primary circuit unit during the current operation with the parameters of a previous time point or a plurality of previous time points during the current operation. The change state of the primary circuit is then determined based on an error analysis between the real-time parameters and the historical parameters.

Optionally, the change state of the primary circuit can include a long-term change and a short-term change. When the real-time parameters match the historical parameters closely and the error is relatively small, it indicates that the primary circuit unit has not experienced a sudden change in parameters, and the change state of the primary circuit is a long-term change. For instance, the change in the real-time parameters of the primary circuit unit may result from gradual adjustments of operating conditions of the primary circuit during an operation, such as a slow transition process during a power operation or a slow transition process from a full power to a zero power. When the real-time parameters deviate significantly from the historical parameters and exhibit an abrupt change, it indicates that the parameters in the primary circuit unit have undergone a disturbance regulation, which may be changes in real-time parameters caused by an operator's intervention. In this case, the change state of the primary circuit is a short-term change, such as a power regulation or a load shedding.

At step 304, control the zinc injection based on the real-time zinc concentration, the change state of the primary circuit, and the standard concentration range.

Specifically, the controller analyzes whether the current zinc concentration of the primary circuit unit is normal based on the comparison result of the real-time zinc concentration with the standard concentration range and the change state of the primary circuit. Then, based on the analysis result, the controller controls the zinc injection accordingly, and adjusts the zinc injection process, thereby ensuring that the zinc concentration in the primary circuit meets the requirements, and improving the accuracy of the zinc injection process control.

The controller analyzes the real-time zinc concentration and the standard concentration range. In an embodiment, as shown in FIG. 4, step 304 includes steps 402 and 404.

At Step 402, analyze the real-time zinc concentration and the standard concentration range to obtain the concentration analysis result.

The standard concentration range can be set as required and can be a fixed concentration range or can include different concentration ranges set according to different operating conditions of the primary circuit unit. The standard concentration range includes the upper threshold and the lower threshold. When the real-time zinc concentration is less than or equal to the upper threshold and greater than or equal to the lower threshold, the real-time zinc concentration is within the standard concentration range. When the real-time zinc concentration is greater than the upper threshold, the real-time zinc concentration is outside the standard concentration range, and the concentration is excessively high. When the real-time zinc concentration is less than the lower threshold, the real-time zinc concentration is outside the standard concentration range, and the concentration is excessively low.

Specifically, the controller compares the real-time zinc concentration with the standard concentration range to determine whether the real-time zinc concentration is within the standard concentration range. If the real-time zinc concentration is outside the standard concentration range, it is necessary to further determine whether the real-time zinc concentration is excessively high or excessively low to obtain the concentration analysis result that the concentration is excessively high, normal, or excessively low.

At step 404, control the zinc injection based on the concentration analysis result and the change state of the primary circuit.

Since the state change of the primary circuit also affects the real-time zinc concentration data, controlling the zinc injection based solely on the concentration analysis result is insufficiently accurate. The controller controls the zinc injection based on the concentration analysis result in combination with the change state of the primary circuit, thereby enabling the zinc injection to be adjusted according to actual needs of the primary circuit.

In this embodiment, the zinc injection control method includes controlling the zinc injection device to inject zinc into the primary circuit of the nuclear power plant at the preset zinc injection flow rate, acquiring the real-time zinc concentration and the real-time parameters of the primary circuit unit, and controlling the zinc injection based on the real-time zinc concentration, the real-time parameters of the primary circuit unit, and the standard concentration range. The zinc injection is controlled correspondingly by incorporating the real-time parameters of the primary circuit unit, such that the zinc injection device is integrated with the parameters of the primary-circuit unit, and the corresponding zinc injection control is performed for the primary circuit unit under different conditions, thereby matching the zinc concentration requirements of the primary circuit and achieving a precise zinc injection control.

An embodiment as shown in FIG. 5, after step 402, further includes step 502 of increasing the frequency of acquiring the real-time zinc concentration when the concentration analysis result is outside the standard concentration range.

If the concentration analysis result is that the real-time zinc concentration is outside the standard concentration range, it may be that the concentration is excessively high or may be that the concentration is excessively low. When the concentration analysis result is that the real-time zinc concentration is outside the standard concentration range, and when it has not yet been determined whether the abnormal zinc concentration is caused by the change state of the primary circuit, adjustments to the zinc injection device cannot be made hastily. To ensure the stability and reliability of the zinc injection control, the controller will increase the frequency of acquiring the real-time zinc concentration and collect more zinc concentration data for analysis, thereby facilitating a subsequent zinc injection control.

Optionally, the real-time zinc concentration can be acquired by the controller from the concentration detection device. Increasing the frequency of acquiring the real-time zinc concentration can be achieved by the controller collecting the zinc concentration from the concentration detection device more frequently, or by controlling the concentration detection device to increase a detection frequency and transmit the data to the controller accordingly.

In this embodiment, by increasing the frequency of acquiring the real-time zinc concentration, changes in the zinc concentration can be obtained more frequently, thus improving the accuracy of the real-time zinc concentration and making subsequent zinc injection adjustments more accurate and reliable.

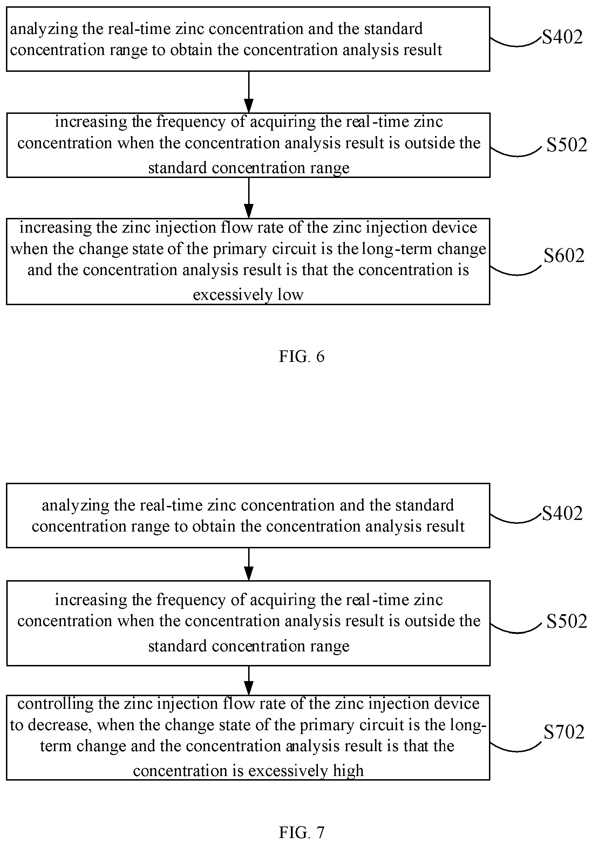

In an embodiment, the change state of the primary circuit includes the long-term change, and the concentration analysis result includes the concentration being excessively low. As shown in FIG. 6, step 404 includes step 602 of: increasing the zinc injection flow rate of the zinc injection device when the change state of the primary circuit is the long-term change and the concentration analysis result is that the concentration is excessively low.

Specifically, when the change state of the primary circuit is the long-term change and the concentration analysis result is that the concentration is excessively low, the controller analyzes that there is no sudden change in the parameters of the primary circuit unit and that the real-time zinc concentration is relatively low, then a zinc replenishment is required for the primary circuit. The controller can control the zinc injection flow rate of the zinc injection device to increase to replenish zinc for the primary circuit, ensuring a stable operation of the primary circuit. Specifically, the zinc injection device is controlled to inject zinc into the primary circuit of the nuclear power plant at a preset zinc replenishment flow rate, which is greater than the preset zinc injection flow rate.

In fact, the concentration analysis results may vary. In an embodiment, the change state of the primary circuit includes the long-term change, and the concentration analysis result includes the concentration being excessively high. As shown in FIG. 7, step 404 includes step 702 of: controlling the zinc injection flow rate of the zinc injection device to decrease, when the change state of the primary circuit is the long-term change and the concentration analysis result is that the concentration is excessively high.

Specifically, when the change state of the primary circuit is the long-term change and the concentration analysis result is that the concentration is excessively high, the controller analyzes that there is no sudden change in the parameters of the primary circuit unit and that the real-time zinc concentration is relatively high, an operation to reduce the zinc concentration in the primary circuit is required. The controller can control the zinc injection flow rate of the zinc injection device to decrease to reduce the zinc concentration in the primary circuit, thus ensuring the stable operation of the primary circuit. Specifically, the zinc injection device is controlled to inject zinc into the primary circuit of the nuclear power plant at a preset zinc reduction flow rate, which is greater than the preset zinc injection flow rate. In the embodiments, both the preset zinc replenishment flow rate and the preset zinc reduction flow rate can be set by the operators. In this embodiment, the zinc concentration is reduced by decreasing the zinc injection flow rate of the zinc injection device, thereby achieving an accurate regulation for the zinc concentration.

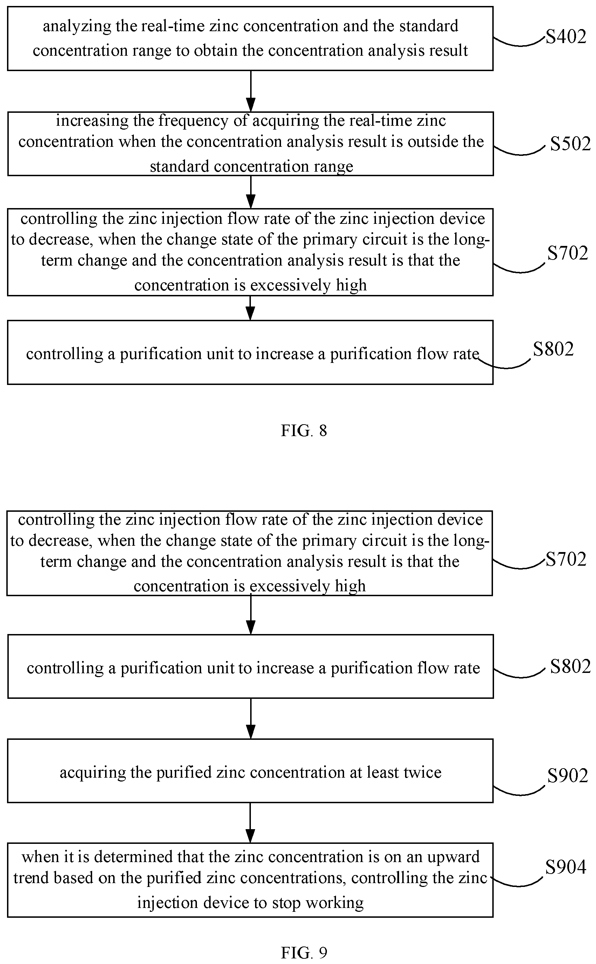

A device, which can be controlled by the controller to reduce the zinc concentration, is not limited to the zinc injection device. An embodiment shown in FIG. 8, after step 702 of controlling the zinc injection flow rate of the zinc injection device to decrease, further includes step 802 of: controlling a purification unit to increase a purification flow rate.

The controller is further connected to the purification unit, which can introduce zinc-free liquid into the primary circuit to reduce the real-time zinc concentration in the primary circuit. The zinc-free liquid can be pure water or any other liquid that does not contain zinc and does not react with zinc. The purification unit is one of the components of the reactor chemistry and volume control system (the RCV system), and the RCV system is an auxiliary system in the reactor coolant system and configured for injecting liquid into the primary circuit. The RCV system differs from the zinc injection system in that the liquid transmitted by the RCV system is mainly for cooling and does not contain zinc, while the zinc solution in the zinc injection system is mainly used for corrosion prevention and protecting the components in the primary circuit.

Specifically, the controller, after controlling the zinc injection device to reduce the zinc injection flow rate, further controls the purification unit to increase the purification flow rate. The purification flow rate refers to an injection rate of the zinc-free liquid in the purification unit. Increasing the purification flow rate can further reduce the zinc concentration, thereby allowing the real-time zinc concentration to be reduced to within the standard concentration range more quickly.

For timely detection and adjustment of the zinc injection control to avoid safety hazards caused by the zinc concentration fluctuations, in an embodiment, as shown in FIG. 9, after step 802, steps 902 and 904 are further included.

At step 902, acquire the purified zinc concentration at least twice.

The controller acquires the zinc concentration again. At this point, operations to reduce the zinc injection flow rate and increase the purification flow rate have been already performed. Therefore, the zinc concentration acquired now can be referred to as the purified zinc concentration. To ensure the reliability of the purified zinc concentration, the controller needs to acquire the purified zinc concentration at least twice and then analyze each purified zinc concentration.

For example, the controller analyzes each purified zinc concentration, which could be done by calculating the average of the purified zinc concentrations and comparing the average with a standard concentration range. Other analytical procedures could also be used.

At step 904, when it is determined that the zinc concentration is in an upward trend based on the purified zinc concentrations, control the zinc injection device to stop working.

Specifically, the controller analyzes each purified zinc concentration, arranges the purified zinc concentrations chronologically according to the acquisition time, and analyzes the resulting data series. When the values in the series decrease sequentially, or each subsequent value is less than or equal to a preceding value thereof, it is determined that the zinc concentration is in a downward trend. When the values in the series increase sequentially, or each subsequent value is greater than or equal to a preceding value thereof, it is determined that the zinc concentration is in an upward trend. When the values in the series fluctuate in a wavy pattern, that is, when there exist instances where a preceding value is greater than the subsequent value thereof and another preceding value is less than a subsequent value thereof, it is determined that the zinc concentration is in a fluctuating trend.

When the controller determines that the zinc concentration is in the upward trend, it indicates that the measures of reducing the zinc injection flow rate and increasing the purification flow rate have not had a corresponding impact on the zinc concentration, and that there is a safety hazard, thus the controller needs to control the zinc injection device to stop working. Optionally, when the controller determines that the zinc concentration is in the downward trend, it indicates that the measures of reducing the zinc injection flow rate and increasing the purification flow rate are effective, thus the controller can return to perform step 204 to continue monitoring the real-time zinc concentration. If the controller determines that the zinc concentration is in the fluctuating trend, step 902 can be performed repeatedly to maintain continuous monitoring of the purified zinc concentration.

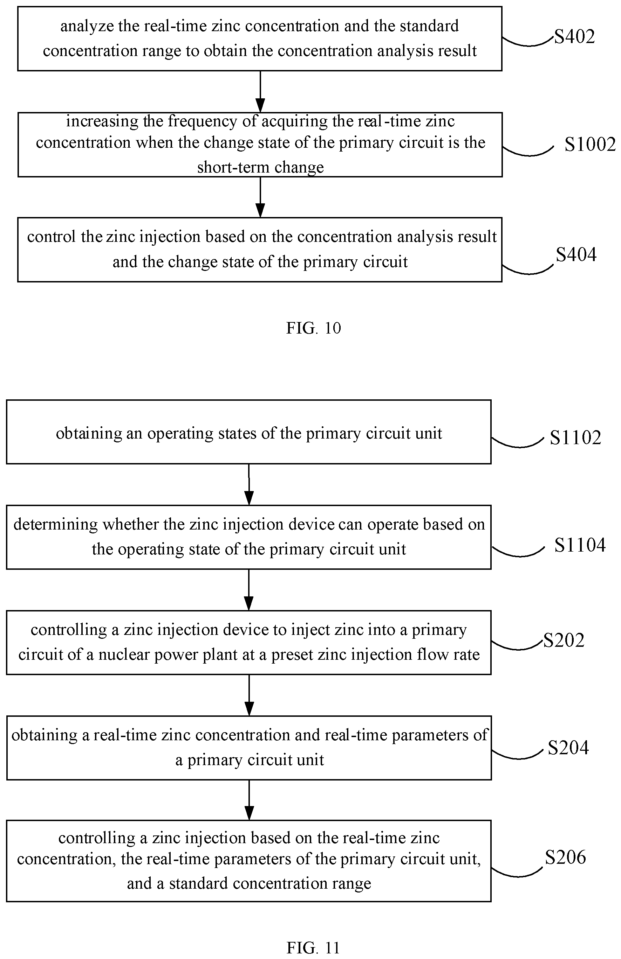

The change state of the primary circuit further includes the short-term change. An embodiment shown in FIG. 10, before step 404, further includes step 1002 of increasing the frequency of acquiring the real-time zinc concentration when the change state of the primary circuit is the short-term change.

When the real-time parameters deviate significantly from the historical parameters and exhibit an abrupt change, it indicates that the parameters in the primary circuit unit have undergone a disturbance regulation, which may be changes in real-time parameters caused by an operator's intervention. In this case, the change state of the primary circuit is the short-term change, such as a power regulation or a load shedding.

Specifically, when the change in the primary circuit is short-term, the controller determines that the real-time zinc concentration acquired in this case will be affected by the change in the primary circuit, thus determining that the reliability of the real-time zinc concentration acquired at this time will be reduced. To ensure the reliability of the real-time zinc concentration, it is necessary to increase the frequency of acquiring the real-time zinc concentration.

For example, the short-term change might be caused by a power adjustment. Furthermore, when the concentration analysis result is that the concentration is excessively high, and if an operator needs to perform a power adjustment, the zinc injection device must be stopped before any power adjustments are performed.

Furthermore, the concentration analysis result obtained based on the real-time zinc concentration and the standard concentration range may further include that the concentration exceeds the limit. That is, the standard concentration range includes not only the upper and lower thresholds but also a warning value, and the warning value is greater than the upper threshold. When the real-time zinc concentration is greater than the upper threshold but less than or equal to the warning value, the real-time zinc concentration is outside the standard concentration range and is excessively high. When the real-time zinc concentration is greater than the warning value, the real-time zinc concentration is outside the standard concentration range and exceeds the limit. When the concentration analysis result is that the concentration exceeds the limit, the controller, while simultaneously increasing the frequency of acquiring the real-time zinc concentration, controls the zinc injection device to stop working and controls the purification unit to increase the purification flow rate.

Further, when the controller performs any zinc injection control as described in the application, if a signal of the RCV system, in which the purification unit connected to the controller is arranged, is abnormal or lost, the controller will control the zinc injection device to stop working.

In the above embodiments, by analyzing the change state of the primary circuit and the concentration analysis result, and using this analysis as an important basis for the zinc injection control, the intelligent, rapid, and accurate zinc injection control is improved. Correspondingly, the zinc injection device or other related systems (such as the RCV system) are controlled to change the zinc concentration in the primary circuit, thereby achieving the zinc injection control of the primary circuit and ensuring the safety and reliability of the primary circuit.

An embodiment shown in FIG. 11, before step 202, further includes steps 1102 and 1104.

At step 1102, obtain an operating state of the primary circuit unit.

The primary circuit, when performing a power generation function, can have a plurality of operating states, referred to as the operating states of the primary circuit unit. For example, these operating states include a hot functional testing period, an operation period, and a shutdown period. The controller acquires the operating state of the primary circuit to execute step 1104 of: determining whether the zinc injection device is allowed to operate based on the operating state of the primary circuit unit.

Specifically, the zinc injection device is controlled according to different operating states of the primary circuit unit, so that the operation of the zinc injection device is combined and matched with the operation of the primary circuit unit, thereby improving the correspondence between the zinc injection control and the operating state of the primary circuit unit, and providing a more accurate zinc concentration adjustment. When it is determined that the zinc injection device is allowed to operate, step 202 is executed.

For example, when the operating state of the primary circuit unit is the hot functional testing period, the zinc injection device is started after an upstream residual heat removal system (a system in the nuclear power plant) of the primary circuit unit is shut down, and the zinc injection device is controlled to stop working after the completion of passivation and before the start of boronation. When the operating state of the primary circuit unit is the operation period, the zinc injection device is not started during a startup stage in the operation period, but is started during a power operation stage in the operation period. When the operating state of the primary circuit unit is the shutdown period, the zinc injection device is controlled to reduce the zinc injection flow rate approximately 72 hours before a power reduction begins during the shutdown period, and the zinc injection device is controlled to stop working at least approximately 24 hours before a complete shutdown.

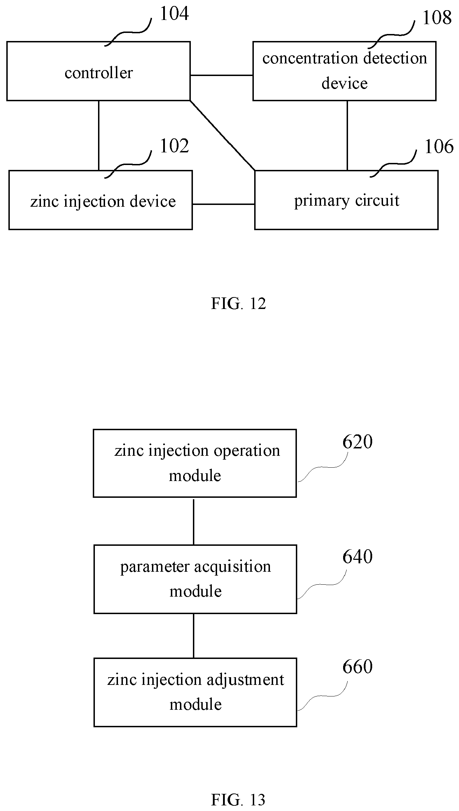

Based on the same technical concepts, the preset application also provides a zinc injection system. In an embodiment, as shown in FIG. 12, the zinc injection system includes a zinc injection device 102, a controller 104, and a concentration detection device 108. The controller 104 is connected to the zinc injection device 102 and the concentration detection device 108. The concentration detection device 108 is configured to acquire the real-time zinc concentration of a primary circuit 106 of a nuclear power plant and send it to the controller 104. The controller 104 controls the zinc injection device 102 to inject zinc into the primary circuit 106.

Specifically, the zinc injection device 102 injects zinc into the primary circuit 106 of the nuclear power plant. The concentration detection device 108 is configured to detect the zinc concentration in the primary circuit 106 of the nuclear power plant. The controller 104 is connected to the concentration detection device 108 and the primary circuit 106 of the nuclear power plant to control the zinc injection of the zinc injection device 102. The zinc injection device 102 includes zinc injection pumps and zinc injection tanks. Each zinc injection tank is equipped with two zinc injection pumps, and the zinc injection pumps are configured as one pump in operation and one as a backup, thereby providing redundancy and improving the utilization rate of the zinc injection device.

Furthermore, the zinc injection tank is equipped with a level gauge connected to the controller 104 to detect a liquid level in the zinc injection tank, which allows the controller 104 to monitor a status of the zinc injection tank. When an abnormal liquid level occurs, the controller 104 can generate an alarm message: an alarm is triggered when the liquid level falls below a first level threshold, prompting the replenishment of liquid; an alarm is triggered when the liquid level falls below a second level threshold, simultaneously controlling the zinc injection device 102 to stop working. The level gauge can also display readings on the site, thus allowing operators to read the dosage of chemical added in real-time during the preparation process to prepare the chemical solution that meets the concentration requirements.

A flow measurement instrument is disposed at the outlet of the zinc injection pump to detect the injection flow rate. A safety valve and a solenoid valve can be further disposed in the primary circuit 106. The controller 104 detects the states of the safety valve and the solenoid valve to further obtain the operating state of the primary circuit 106 and the real-time parameters of the primary circuit unit 106. When the safety valve opens, the controller 104 may generate an alarm message to alert the operators that the pressure has exceeded the threshold.

To better understand the above solutions, and in conjunction with the application scenario shown in FIG. 12, the following detailed explanation will be provided with reference to an embodiment.

In an embodiment, the zinc injection system includes a zinc injection device, a controller, and a concentration detection device. The controller is connected to the zinc injection device and the concentration detection device. The concentration detection device is configured to acquire the real-time zinc concentration of the primary circuit of the nuclear power plant and send it to the controller. The controller controls the zinc injection device to inject zinc into the primary circuit, and the injected solution is a zinc acetate solution. The zinc injection device includes the zinc injection pumps and the zinc injection tanks. Each zinc injection tank is equipped with two zinc injection pumps configured as one in operation and one as a backup, thereby providing redundancy and improving the utilization rate of the zinc injection device. The zinc injection tank is equipped with the level gauge connected to the controller 104 to detect a liquid level in the zinc injection tank. The flow measurement instrument is disposed at the outlet of the zinc injection pump to detect the injection flow rate. The safety valve and the solenoid valve can be further disposed in the primary circuit. The controller detects the states of the safety valve and the solenoid valve to further obtain the operating state of the primary circuit and the real-time parameters of the primary circuit unit. When the containment of the primary circuit is isolated, when the letdown line is isolated, and when the purification unit bypass is active, the controller closes the zinc injection isolation valve and stops the zinc injection pump. The controller can be a control cabinet with an independent power supply design, so that even in the event of a distributed control system (DCS) control power failure, the implementation of partial local control functions is still guaranteed.

The controller acquires the operating state of the primary circuit unit to determine whether the zinc injection device is allowed to operate based on the operating state of the primary circuit unit. When the operating state of the primary circuit unit is the hot functional testing period, the zinc injection device is started after an upstream residual heat removal system (a system in the nuclear power plant) of the primary circuit unit is shut down, and the zinc injection device is controlled to stop working after the completion of passivation and before the start of boronation. When the operating state of the primary circuit unit is the operation period, the zinc injection device is not started during a startup stage in the operation period, but is started during a power operation stage in the operation period. When the operating state of the primary circuit unit is the shutdown period, the zinc injection device is controlled to reduce the zinc injection flow rate approximately 72 hours before a power reduction begins in the shutdown period, and the zinc injection device is controlled to stop working at least approximately 24 hours before a complete shutdown. The operation of the zinc injection device is described as follows.

The zinc injection device is controlled to inject zinc into the primary circuit of the nuclear power plant at the preset zinc injection flow rate. The real-time zinc concentration and the real-time parameters of the primary circuit unit are acquired. The change state of the primary circuit is obtained based on the real-time parameters and historical parameters of the primary circuit unit. The real-time zinc concentration and the standard concentration range are analyzed to obtain the concentration analysis result. The frequency of acquiring the real-time zinc concentration is increased when the concentration analysis result is outside the standard concentration range. The controller controls the zinc injection based on the concentration analysis result and the change state of the primary circuit.

Steps of controlling the zinc injection are not unique and include: increasing the frequency of acquiring the real-time zinc concentration when the change state of the primary circuit is the short-term change; controlling the zinc injection flow rate of the zinc injection device to increase when the change state of the primary circuit is the long-term change and when the concentration analysis result is that the concentration is excessively low; controlling the zinc injection flow rate of the zinc injection device to decrease when the change state of the primary circuit is the long-term change and when the concentration analysis result is that the concentration is excessively high; controlling the purification unit to increase the purification flow rate, and obtaining the purified zinc concentration at least twice; and controlling the zinc injection device to stop working when it is determined that the zinc concentration is in an upward trend based on the purified zinc concentrations; and while simultaneously increasing the frequency of acquiring the real-time zinc concentration, controlling, by the controller, the zinc injection device to stop working and the purification unit to increase the purification flow rate, when the concentration analysis result is that the concentration exceeds the limit.

In the embodiments, by continuously injecting the zinc acetate solution into the primary circuit of the nuclear power plant, the morphology of the metal oxide layer in the primary circuit is modified. This reduces the corrosion of the primary circuit equipment materials and decreases the deposition of activated corrosion products from the coolant into the primary circuit materials, thereby reducing the amount of radioactive cobalt deposition on the primary circuit materials, lowering the radiation field in the primary circuit, and significantly reducing the costs of radiation protection and waste treatment.

It should be understood that, although the steps are displayed sequentially according to the instructions of the arrows in the flowcharts of the embodiments, these steps are not necessarily performed sequentially according to the sequence instructed by the arrows. Unless otherwise explicitly specified in this specification, execution of the steps is not strictly limited, and the steps may be performed in other sequences. Moreover, at least some of the steps in the flowcharts in each embodiment may include a plurality of sub-steps or a plurality of stages. The steps or stages are not necessarily performed at the same moment but may be performed at different moments. Execution of the steps or stages is not necessarily sequentially performed, but may be performed alternately with other steps or at least some of sub-steps or stages of other steps.

Based on the same inventive concepts, an embodiment of the present application further provides a zinc injection control apparatus for implementing the zinc injection control method described above. The implementation solutions for solving the problem provided by the apparatus are similar to the implementation solutions described in the above method, so for the specific limitations on one or more embodiments of the zinc injection control apparatus provided below, reference may be made to the limitations of the zinc injection control method described above, which will not be described repeatedly herein.

In an exemplary embodiment, as shown in FIG. 13, a zinc injection control apparatus is provided, including: a zinc injection operation module 620, a parameter acquisition module 640, and a zinc injection adjustment module 660.

The zinc injection operation module 620 is configured to control the zinc injection device to inject zinc into the primary circuit at a preset zinc injection flow rate.

The parameter acquisition module 640 is configured to acquire a real-time zinc concentration and real-time parameters of the primary circuit unit.

The zinc injection adjustment module 660 is configured to control the zinc injection based on the real-time zinc concentration, the real-time parameters of the primary circuit unit, and a standard concentration range.

In an embodiment, the zinc injection adjustment module 660 is further configured to obtain a change state of the primary circuit based on the real-time parameters and historical parameters of the primary circuit unit, and control the zinc injection based on the real-time zinc concentration, the change state of the primary circuit, and the standard concentration range.

In an embodiment, the zinc injection control module 660 is further configured to analyze the real-time zinc concentration and the standard concentration range to obtain the concentration analysis result, and control the zinc injection based on the concentration analysis result and the change state of the primary circuit.

In an embodiment, the zinc injection adjustment module 660 is further configured to, after analyzing the real-time zinc concentration and the standard concentration range to obtain the concentration analysis result, increase the frequency of acquiring the real-time zinc concentration when the concentration analysis result is outside the standard concentration range.

In an embodiment, the change state of the primary circuit includes the long-term change, and the concentration analysis result is that the concentration is excessively low. The zinc injection adjustment module 660 is further configured to control the zinc injection flow rate of the zinc injection device to increase when the change state of the primary circuit is the long-term change and the concentration analysis result is that the concentration is excessively low.

In an embodiment, the change state of the primary circuit is the long-term change, and the concentration analysis result is that the concentration is excessively high. The zinc injection adjustment module 660 is further configured to control the zinc injection flow rate of the zinc injection device to decrease, when the change state of the primary circuit is the long-term change and the concentration analysis result is that the concentration is excessively high.

In an embodiment, the zinc injection regulating module 660 is further configured to, after controlling the zinc injection flow rate of the zinc injection device to decrease, control a purification unit to increase a purification flow rate.

In an embodiment, the zinc injection adjustment module 660 is further configured to, after controlling the purification unit to increase the purification flow rate, acquiring the purified zinc concentration at least twice, and when it is determined that the zinc concentration is in an upward trend based on the purified zinc concentrations, control the zinc injection device to stop working.

In an embodiment, the change state of the primary circuit further includes the short-term change. The zinc injection adjustment module 660 is further configured to, before controlling the zinc injection based on the concentration analysis result and the change state of the primary circuit, increase the frequency of acquiring the real-time zinc concentration when the change state of the primary circuit is the short-term change.

In an embodiment, the zinc injection control apparatus further includes a zinc injection start module configured to, before the zinc injection operation module 620 controls the zinc injection device to inject zinc into the primary circuit at the preset zinc injection flow rate, obtain the operating state of the primary circuit unit and determine whether the zinc injection device is allowed to operate based on the operating state of the primary circuit unit. When the zinc injection device is allowed to operate, the zinc injection operation module 620 controls the zinc injection device to inject zinc into the primary circuit at the preset zinc injection flow rate.

Each module in the zinc injection control apparatus above may be implemented by software, hardware, or combinations thereof, either in whole or in part. The modules above may be embedded in or independent of the processor of the computer device in the form of hardware or may be stored in the memory of the computer device in the form of software, so that the processor may call and execute operations corresponding to the modules above.

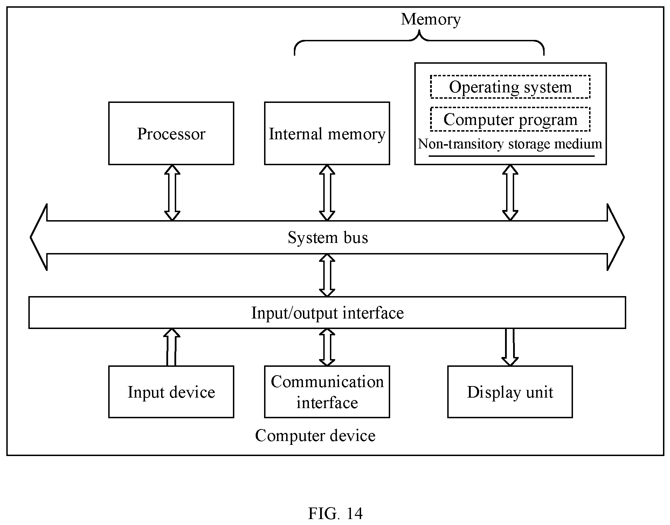

In an exemplary embodiment, a computer device is provided. The computer device may be a terminal, and the internal structure diagram may be as shown in FIG. 14. The computer device includes a processor, a memory, an input/output interface, a communication interface, a display unit, and an input device. The processor, the memory, and the input/output interface are connected through a system bus, while the communication interface, the display unit, and the input device are connected to the system bus through the input/output interface. The processor of the computer device is configured to provide computing and control capabilities. The memory of the computer device includes non-transitory storage medium and internal memory. The non-volatile storage medium stores an operating system, and computer programs. The internal memory provides an environment for the operation of the operating system and the computer programs in the non-volatile storage medium. The input/output interface of this computer device is configured for exchanging information between the processor and external devices. The communication interface of the computer device is configured for wired or wireless communication with an external terminal, and the wireless communication may be realized by WIFI, mobile cellular network, NFC (Near Field Communication) or other technologies. The computer program, when executed by the processor, performs the zinc injection control method. The display unit of the computer device is configured to form visually visible images, and can be a display screen, a projection device, or a virtual reality imaging device. The display screen can be a liquid crystal display screen or an electronic ink display screen. The input device of the computer device can be a touch layer covered on the display screen, or can be a button, a trackball or a touchpad arranged on the computer device casing, or can be an external keyboard, touchpad or mouse.

A person skilled in the art may understand that, the structure shown in FIG. 14 is only a block diagram of partial structure related to a solution of the present application and does not constitute a limitation on the computer device to which the solution of the present application is applied. In an embodiment, the computer device may include more or less components than those shown in the drawings, or include a combination of some components, or have different component layouts.

In an exemplary embodiment, a computer device is provided. The computer device includes a memory and a processor. A computer program is stored on the memory, and the processor, when executing the computer program, performs the following steps of:
controlling the zinc injection device to inject zinc into the primary circuit of the nuclear power plant at a preset zinc injection flow rate;
acquiring a real-time zinc concentration and real-time parameters of the primary circuit unit;
controlling the zinc injection based on the real-time zinc concentration, the real-time parameters of the primary circuit unit, and a standard concentration range.

In an embodiment, the processor, when executing the computer program, further performs the following steps of:
obtaining a change state of the primary circuit based on the real-time parameters and historical parameters of the primary circuit unit, and controlling the zinc injection based on the real-time zinc concentration, the change state of the primary circuit, and the standard concentration range.

In an embodiment, the processor, when executing the computer program, further performs the following steps of:
analyzing the real-time zinc concentration and the standard concentration range to obtain the concentration analysis result, and controlling the zinc injection based on the concentration analysis result and the change state of the primary circuit.

In an embodiment, the processor, when executing the computer program, further performs the following steps of:
increasing the frequency of acquiring the real-time zinc concentration when the concentration analysis result is outside the standard concentration range.

In an embodiment, the processor, when executing the computer program, further performs the following steps of:
controlling the zinc injection flow rate of the zinc injection device to increase when the change state of the primary circuit is the long-term change and the concentration analysis result is that the concentration is excessively low.

In an embodiment, the processor, when executing the computer program, further performs the following step of:
controlling the zinc injection flow rate of the zinc injection device to decrease, when the change state of the primary circuit is the long-term change and the concentration analysis result is that the concentration is excessively high.

In an embodiment, the processor, when executing the computer program, further performs the following step of:
controlling a purification unit to increase a purification flow rate.

In an embodiment, the processor, when executing the computer program, further performs the following steps of:
acquiring the purified zinc concentration at least twice, and when it is determined that the zinc concentration is in an upward trend based on the purified zinc concentrations, controlling the zinc injection device to stop working.

In an embodiment, the processor, when executing the computer program, further performs the following step of:
increasing the frequency of acquiring the real-time zinc concentration when the change state of the primary circuit is the short-term change.

In an embodiment, the processor, when executing the computer program, further performs the following steps of:
acquiring the operating state of the primary circuit unit, determining whether the zinc injection device is allowed to operate based on the operating state of the primary circuit unit, and when the zinc injection device is allowed to operate, performing a step of controlling the zinc injection device to inject zinc into the primary circuit at the preset zinc injection flow rate.

In an embodiment, a computer-readable storage medium is provided, having a computer program stored thereon, and the computer program, when executed by a processor, causes the processor to perform the following steps of:
controlling the zinc injection device to inject zinc into the primary circuit of the nuclear power plant at a preset zinc injection flow rate;
acquiring a real-time zinc concentration and real-time parameters of the primary circuit unit;
controlling the zinc injection based on the real-time zinc concentration, the real-time parameters of the primary circuit unit, and a standard concentration range.

In an embodiment, the computer program, when executed by the processor, causes the processor to perform the following steps of:
obtaining a change state of the primary circuit based on the real-time parameters and historical parameters of the primary circuit unit, and controlling the zinc injection based on the real-time zinc concentration, the change state of the primary circuit, and the standard concentration range.

In an embodiment, the computer program, when executed by the processor, causes the processor to perform the following steps of:
analyzing the real-time zinc concentration and the standard concentration range to obtain the concentration analysis result, and controlling the zinc injection based on the concentration analysis result and the change state of the primary circuit.

In an embodiment, the computer program, when executed by the processor, causes the processor to perform the following step of:
increasing the frequency of acquiring the real-time zinc concentration when the concentration analysis result is outside the standard concentration range.

In an embodiment, the computer program, when executed by the processor, causes the processor to perform the following step of:
controlling the zinc injection flow rate of the zinc injection device to increase when the change state of the primary circuit is the long-term change and the concentration analysis result is that the concentration is excessively low.

In an embodiment, the computer program, when executed by the processor, causes the processor to perform the following step of:
controlling the zinc injection flow rate of the zinc injection device to decrease, when the change state of the primary circuit is the long-term change and the concentration analysis result is that the concentration is excessively high.

In an embodiment, the computer program, when executed by the processor, causes the processor to perform the following step of:
controlling a purification unit to increase a purification flow rate.

In an embodiment, the computer program, when executed by the processor, causes the processor to perform the following steps of:
acquiring the purified zinc concentration at least twice, and when it is determined that the zinc concentration is in an upward trend based on the purified zinc concentrations, controlling the zinc injection device to stop working.

In an embodiment, the computer program, when executed by the processor, causes the processor to perform the following step of:
increasing the frequency of acquiring the real-time zinc concentration when the change state of the primary circuit is the short-term change.

In an embodiment, the computer program, when executed by the processor, causes the processor to perform the following steps of:
acquiring the operating state of the primary circuit unit, determining whether the zinc injection device is allowed to operate based on the operating state of the primary circuit unit, and when the zinc injection device is allowed to operate, performing a step of controlling the zinc injection device to inject zinc into the primary circuit at the preset zinc injection flow rate.

In an embodiment, a computer program product is provided, including a computer program. The computer program, when executed by a processor, performs the following steps of:
controlling the zinc injection device to inject zinc into the primary circuit of the nuclear power plant at a preset zinc injection flow rate;
acquiring a real-time zinc concentration and real-time parameters of the primary circuit unit;
controlling the zinc injection based on the real-time zinc concentration, the real-time parameters of the primary circuit unit, and a standard concentration range.

In an embodiment, the computer program, when executed by the processor, further performs the following steps of:
obtaining a change state of the primary circuit based on the real-time parameters and historical parameters of the primary circuit unit, and controlling the zinc injection based on the real-time zinc concentration, the change state of the primary circuit, and the standard concentration range.

In an embodiment, the computer program, when executed by the processor, further performs the following steps of: analyzing the real-time zinc concentration and the standard concentration range to obtain the concentration analysis result, and controlling the zinc injection based on the concentration analysis result and the change state of the primary circuit.

In an embodiment, the computer program, when executed by the processor, further performs the following step of:
increasing the frequency of acquiring the real-time zinc concentration when the concentration analysis result is outside the standard concentration range.

In an embodiment, the computer program, when executed by the processor, further performs the following step of:
controlling the zinc injection flow rate of the zinc injection device to increase when the change state of the primary circuit is the long-term change and the concentration analysis result is that the concentration is excessively low.

In an embodiment, the computer program, when executed by the processor, further performs the following step of:
controlling the zinc injection flow rate of the zinc injection device to decrease, when the change state of the primary circuit is the long-term change and the concentration analysis result is that the concentration is excessively high.

In an embodiment, the computer program, when executed by the processor, further performs the following step of:
controlling a purification unit to increase a purification flow rate.

In an embodiment, the computer program, when executed by the processor, further performs the following steps of:
acquiring the purified zinc concentration at least twice, and when it is determined that the zinc concentration is in an upward trend based on the purified zinc concentrations, controlling the zinc injection device to stop working.

In an embodiment, the computer program, when executed by the processor, further performs the following step of:
increasing the frequency of acquiring the real-time zinc concentration when the change state of the primary circuit is the short-term change.

In an embodiment, the computer program, when executed by the processor, further performs the following steps of:
acquiring the operating state of the primary circuit unit, determining whether the zinc injection device is allowed to operate based on the operating state of the primary circuit unit, and when the zinc injection device is allowed to operate, performing a step of controlling the zinc injection device to inject zinc into the primary circuit at the preset zinc injection flow rate.

A person of ordinary skill in the art can understand that all or some of procedures of the method in the foregoing embodiments can be implemented by a computer program instructing relevant hardware. The computer program can be stored in a non-transitory computer readable storage medium. When the computer program is executed, the procedures of the foregoing method embodiments can be implemented. References to the memory, the database, or other medium used in the embodiments provided in the present application can all include at least one of a non-transitory or a volatile memory. The non-transitory memory can include a read-only memory (ROM), a magnetic tape, a floppy disk, a flash memory, an optical memory, a high-density embedded non-volatile memory, a resistive random-access memory (ReRAM), a magnetoresistive random access memory (MRAM), a ferroelectric random-access memory (FRAM), a phase change memory (PCM), a graphene memory, or the like. The volatile memory can include a random-access memory (RAM) or an external cache. As an illustration and not a limitation, the RAM can be in various forms, such as a static random-access memory (SRAM) or a dynamic random-access memory (DRAM). The database involved in the various embodiments provided in the present application can include at least one of a relational database and a non-relational database. The non-relational database can include a blockchain-based distributed database or the like, but is not limited thereto. The processors involved in the various embodiments provided by the present application can be general-purpose processors, central processing units, graphics processors, digital signal processors, programmable logic devices, data processing logic devices based on quantum computing, and are not limited thereto.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements belong to the protection scope of the present application. Therefore, the scope of protection of the patent application should be subject to the appended claims.

## Claims

1. A zinc injection control method, **characterized by** comprising:
controlling a zinc injection device to inject zinc into a primary circuit of a nuclear power plant at a preset zinc injection flow rate;
acquiring a real-time zinc concentration and real-time parameters of a primary circuit unit; and
controlling a zinc injection based on the real-time zinc concentration, the real-time parameters of the primary circuit unit, and a standard concentration range.

2. The method according to claim 1, wherein controlling the zinc injection based on the real-time zinc concentration, the real-time parameters of the primary circuit unit, and the standard concentration range comprises:
obtaining a change state of the primary circuit based on the real-time parameters and historical parameters of the primary circuit unit; and
controlling the zinc injection based on the real-time zinc concentration, the change state of the primary circuit, and the standard concentration range.

3. The method according to claim 2, wherein controlling the zinc injection based on the real-time zinc concentration, the change state of the primary circuit, and the standard concentration range comprises:
analyzing the real-time zinc concentration and the standard concentration range to obtain a concentration analysis result; and
controlling the zinc injection based on the concentration analysis result and the change state of the primary circuit.

4. The method according to claim 3, wherein, after analyzing the real-time zinc concentration and the standard concentration range to obtain the concentration analysis result, the method further comprises:
increasing a frequency of acquiring the real-time zinc concentration when the concentration analysis result is outside the standard concentration range.

5. The method according to claim 3, wherein the change state of the primary circuit comprises a long-term change, and the concentration analysis result comprises the concentration being excessively low; and controlling the zinc injection based on the concentration analysis result and the change state of the primary circuit comprises:
controlling a zinc injection flow rate of the zinc injection device to increase when the change state of the primary circuit is the long-term change and the concentration analysis result is that the concentration is excessively low.

6. The method according to claim 3, wherein the change state of the primary circuit comprises a long-term change, and the concentration analysis result comprises the concentration being excessively high; and controlling the zinc injection based on the concentration analysis result and the change state of the primary circuit comprises:
controlling a zinc injection flow rate of the zinc injection device to decrease, when the change state of the primary circuit is the long-term change and the concentration analysis result is that the concentration is excessively high.

7. The method according to claim 6, wherein, after controlling the zinc injection flow rate of the zinc injection device to decrease, the method further comprises:
controlling a purification unit to increase a purification flow rate.

8. The method according to claim 7, wherein, after controlling the purification unit to increase the purification flow rate, the method further comprises:
acquiring a purified zinc concentration at least twice; and
controlling the zinc injection device to stop working when it is determined that the zinc concentration is in an upward trend based on purified zinc concentrations.

9. The method according to claim 3, wherein the change state of the primary circuit comprises a short-term change, and before controlling the zinc injection based on the concentration analysis result and the change state of the primary circuit, the method comprises:
increasing a frequency of acquiring the real-time zinc concentration when the change state of the primary circuit is the short-term change.

10. The method according to any one of claims 1-9, wherein, before controlling the zinc injection device to inject zinc into the primary circuit at the preset zinc injection flow rate, the method further comprises:
obtaining an operating state of the primary circuit unit;
determining whether the zinc injection device is allowed to operate based on the operating state of the primary circuit unit; and
controlling the zinc injection device to inject zinc into the primary circuit at the preset zinc injection flow rate, when it is determined that the zinc injection device is allowed to operate.

11. A zinc injection control apparatus, **characterized by** comprising:
a zinc injection operation module configured to control a zinc injection device to inject zinc into a primary circuit at a preset zinc injection flow rate;
a parameter acquisition module configured to acquire a real-time zinc concentration and real-time parameters of a primary circuit unit; and
a zinc injection adjustment module configured to control a zinc injection based on the real-time zinc concentration, the real-time parameters of the primary circuit unit, and a standard concentration range.

12. The apparatus according to claim 11, wherein the zinc injection adjustment module is further configured to:
obtain a change state of the primary circuit based on the real-time parameters and historical parameters of the primary circuit unit; and
control the zinc injection based on the real-time zinc concentration, the change state of the primary circuit, and the standard concentration range.

13. The apparatus according to claim 12, wherein the zinc injection adjustment module is further configured to:
analyze the real-time zinc concentration and the standard concentration range to obtain a concentration analysis result; and
control the zinc injection based on the concentration analysis result and the change state of the primary circuit.

14. The apparatus according to claim 13, wherein the zinc injection adjustment module is further configured to:
increase a frequency of acquiring the real-time zinc concentration when the concentration analysis result is outside the standard concentration range.

15. The apparatus according to claim 13, wherein the change state of the primary circuit comprises a long-term change, and the concentration analysis result comprises the concentration being excessively low, and the zinc injection adjustment module is further configured to:
control a zinc injection flow rate of the zinc injection device to increase when the change state of the primary circuit is the long-term change and the concentration analysis result is that the concentration is excessively low.

16. The apparatus according to claim 13, wherein the change state of the primary circuit comprises a long-term change, and the concentration analysis result comprising the concentration being excessively high; and the zinc injection adjustment module is further configured to:
control a zinc injection flow rate of the zinc injection device to decrease, when the change state of the primary circuit is the long-term change and the concentration analysis result is that the concentration is excessively high.

17. The apparatus according to claim 16, wherein, after controlling the zinc injection flow rate of the zinc injection device to decrease, the zinc injection adjustment module is further configured to:
control a purification unit to increase a purification flow rate.

18. The apparatus according to claim 17, wherein after controlling the purification unit to increase the purification flow rate, the zinc injection adjustment module is further configured to:
acquire a purified zinc concentration at least twice; and
control the zinc injection device to stop working when it is determined that the zinc concentration is in an upward trend based on purified zinc concentrations.

19. The apparatus according to claim 13, wherein the change state of the primary circuit comprises a short-term change, and the zinc injection adjustment module is further configured to:
increase a frequency of acquiring the real-time zinc concentration when the change state of the primary circuit is the short-term change.

20. The apparatus according to any one of claims 11-19, further comprising a zinc injection start module, and the zinc injection start module is configured to:
obtain an operating state of the primary circuit unit;
determine whether the zinc injection device is allowed to operate based on the operating state of the primary circuit unit; and
control the zinc injection device to inject zinc into the primary circuit at the preset zinc injection flow rate, if yes.

21. A zinc injection system, **characterized by** comprising a zinc injection device, a controller, and a concentration detection device; wherein the controller is connected to the zinc injection device and the concentration detection device; the concentration detection device is configured to acquire the real-time zinc concentration and send the real-time zinc concentration to the controller; and the controller is configured to perform the zinc injection control method of any one of claims 1-10.

22. A computer device, comprising a memory and one or more processors, wherein the memory has computer-readable instructions stored thereon, **characterized in that**, the computer-readable instructions, when executed by the one or more processors, cause the one or more processors to perform steps of:
controlling a zinc injection device to inject zinc into a primary circuit of a nuclear power plant at a preset zinc injection flow rate;
acquiring a real-time zinc concentration and real-time parameters of a primary circuit unit; and
controlling a zinc injection based on the real-time zinc concentration, the real-time parameters of the primary circuit unit, and a standard concentration range.

23. One or more computer storage medium storing computer-readable instructions, **characterized in that**, the computer-readable instructions, when executed by one or more processors, cause the one or more processors to perform steps of:
controlling a zinc injection device to inject zinc into a primary circuit of a nuclear power plant at a preset zinc injection flow rate;
acquiring a real-time zinc concentration and real-time parameters of a primary circuit unit; and
controlling a zinc injection based on the real-time zinc concentration, the real-time parameters of the primary circuit unit, and a standard concentration range.

24. A computer program product comprising a computer program, **characterized in that**, the computer program, when executed by one or more processors, causes the one or more processors to perform steps of:
controlling a zinc injection device to inject zinc into a primary circuit of a nuclear power plant at a preset zinc injection flow rate;
acquiring a real-time zinc concentration and real-time parameters of a primary circuit unit; and
controlling a zinc injection based on the real-time zinc concentration, the real-time parameters of the primary circuit unit, and a standard concentration range.
